# EUROPEAN PATENT APPLICATION

(11) **EP 4 614 872 A1**
(43) Date of publication of application: **10.09.2025**
(21) Application number: 22964103.0
(22) Date of filing: 04.11.2022
(51) Int. Cl.: H04L 9/32, H04W 12/06

(54) **AUTHENTICATION METHODS AND APPARATUSES, COMMUNICATION DEVICE AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2022/130092
(87) International publication number: WO 2024/092801

(57) **Abstract**

Provided in the embodiments of the present disclosure are authentication methods. One method is executed by an edge enabler client (EEC), and the method comprises: sending service providing request information to an edge configuration server (ECS), wherein the service providing request information is used for requesting to acquire a security authentication mode supported by an edge enabler server (EES). Here, the service providing request information sent to the ECS can request to acquire the security authentication mode supported by the EES, so that after authentication capability information of the EES sent by the ECS is received, authentication between the ECS and the EES can be performed on the basis of the security authentication mode supported by the EES which is indicated by the authentication capability information of the EES, making data transmission between the ECS and the EES more secure and reliable, and improving the security and reliability of communication.

## Description

### TECHNICAL FIELD

The present disclosure relates to, but is not limited to, the field of wireless communication technology, and in particular to an authentication method and apparatus, a communication device and a storage medium.

### BACKGROUND

In communication technology, in order to achieve secure and reliable communication, authentication and authorization are required to be performed between an Edge Enabler Client (EEC) and an Edge Configuration Server (ECS), as well as between EEC and an Edge Enabler Server (EES). For the authentication between EEC and ECS and between EEC and EES, authentication methods based on Transport Layer Security (TLS) are used. The TLS authentication methods involve various authentication mechanisms, and for these various authentication mechanisms, if the authentication mechanism used between EEC, ECS and/or EES cannot be determined, it may lead to desynchronization in the authentication between EEC, ECS and/or EES, and low security and reliability problems may occur when performing the authentication.

### SUMMARY

The embodiments of the present disclosure disclose an authentication method, and apparatus, a communication device and a storage medium.

According to a first aspect of an embodiment of the present disclosure, an authentication method is provided, the method is performed by an Edge Enabler Client (EEC), and the method includes:
sending service provisioning request information to an Edge Configuration Server (ECS);
where the service provisioning request information is configured to request to obtain a security authentication mode supported by an Edge Enabler Server (EES).

According to a second aspect of an embodiment of the present disclosure, an authentication method is provided, the method is performed by an Edge Configuration Server (ECS), and the method includes:
receiving service provisioning request information sent by an EEC;
where the service provisioning request information is configured to request to obtain a security authentication mode supported by an Edge Enabler Server (EES).

According to a third aspect of an embodiment of the present disclosure, an authentication method is provided, the method is performed by an Edge Enabler Server (EES), and the method includes:
receiving authentication capability request information sent by an ECS;
where the authentication capability request information is configured to request authentication capability information of the EES, and the authentication capability information of the EES indicates a security authentication mode supported by the EES.

According to a fourth aspect of an embodiment of the present disclosure, an authentication apparatus is provided, where the apparatus includes:
a sending module is configured to send service provisioning request information to an Edge Configuration Server (ECS);
where the service provisioning request information is configured to request to obtain a security authentication mode supported by an Edge Enabler Server (EES).

According to a fifth aspect of an embodiment of the present disclosure, there is provided an authentication apparatus, where the apparatus includes:
a receiving module, configured to receive service provisioning request information sent by an EEC;
where the service provisioning request information is configured to request to obtain a security authentication mode supported by an Edge Enabler Server (EES).

According to a sixth aspect of an embodiment of the present disclosure, there is provided an authentication apparatus, where the apparatus includes:
a receiving module, configured to receive authentication capability request information sent by an ECS;
where the authentication capability request information is configured to request authentication capability information of the EES, and the authentication capability information of the EES indicates a security authentication mode supported by the EES.

According to a seventh aspect of an embodiment of the present disclosure, an authentication system is provided, the system includes an EEC, an ECS and an EES, where the EEC is configured to implement the method performed by the EEC as described in any embodiment of the present disclosure; the ECS is configured to implement the method performed by the ECS as described in any embodiment of the present disclosure; and the EES is configured to implement the method performed by the EES as described in any embodiment of the present disclosure.

According to an eighth aspect of an embodiment of the present disclosure, a communication device is provided, the communication device including:
a processor;
a memory configured to store instructions executable by the processor;
where the processor is configured to implement the method described in any embodiment of the present disclosure when running the executable instructions.

According to a ninth aspect of an embodiment of the present disclosure, a computer storage medium is provided, the computer storage medium stores a computer executable program, and the executable program, when being executed by a processor, implements the method described in any embodiment of the present disclosure.

In the embodiments of present disclosure, service provisioning request information is sent to an Edge Configuration Server (ECS), and the service provisioning request information is configured to request a security authentication mode supported by an Edge Enabler Server (EES). Here, since the service provisioning request information sent to the Edge Configuration Server (ECS) can request the security authentication mode supported by the Edge Enabler Server (EES), after the authentication capability information of the EES sent by the ECS is received, the authentication between the ECS and the EES can be performed based on the security authentication mode supported by the EES indicated by the authentication capability information of the EES, so that the data transmission between the ECS and the EES is more secure and reliable, improving the security and reliability of the communication.

### BRIEF DESCRIPTION OF THE DRAWINGS

FIG. 1 is a schematic structural diagram of a wireless communication system according to an illustrative embodiment.
FIG. 2 is a schematic flow chart of an authentication method according to an illustrative embodiment.
FIG. 3 is a schematic flow chart of an authentication method according to an illustrative embodiment.
FIG. 4 is a schematic flow chart of an authentication method according to an illustrative embodiment.
FIG. 5 is a schematic flow chart of an authentication method according to an illustrative embodiment.
FIG. 6 is a schematic flow chart of an authentication method according to an illustrative embodiment.
FIG. 7 is a schematic flow chart of an authentication method according to an illustrative embodiment.
FIG. 8 is a schematic flow chart of an authentication method according to an illustrative embodiment.
FIG. 9 is a schematic flow chart of an authentication method according to an illustrative embodiment.
FIG. 10 is a schematic flow chart of an authentication method according to an illustrative embodiment.
FIG. 11 is a schematic flow chart of an authentication method according to an illustrative embodiment.
FIG. 12 is a schematic flow chart of an authentication method according to an illustrative embodiment.
FIG. 13 is a schematic structural diagram of an authentication method according to an illustrative embodiment.
FIG. 14 is a schematic structural diagram of an authentication method according to an illustrative embodiment.
FIG. 15 is a schematic structural diagram of an authentication apparatus according to an illustrative embodiment.
FIG. 16 is a schematic structural diagram of an authentication apparatus according to an illustrative embodiment.
FIG. 17 is a schematic structural diagram of an authentication apparatus according to an illustrative embodiment.
FIG. 18 is a schematic structural diagram of an authentication system according to an illustrative embodiment.
FIG. 19 is a schematic structural diagram of a terminal according to an illustrative embodiment.
FIG. 20 is a block diagram of a base station according to an illustrative embodiment.

### DETAILED DESCRIPTION

Illustrative embodiments will be described in detail herein, examples of which are shown in the accompanying drawings. When the following description refers to the drawings, the same numbers in different drawings represent the same or similar elements, unless otherwise indicated. The implementations described in the following illustrative embodiments do not represent all implementations consistent with the embodiments of the present disclosure. Instead, they are merely examples of devices and methods consistent with some aspects of the embodiments of the present disclosure as detailed in the appended claims.

The terms used in the embodiments of present disclosures are only for the purpose of describing specific embodiments and are not intended to limit the embodiments of present disclosures. The singular forms of "a", "an" and "the" used in the embodiments of present disclosures and the appended claims are also intended to include plural forms unless the context clearly indicates other meanings. It should also be understood that the term "and/or" used herein refers to and includes any or all possible combinations of one or more associated items listed.

It should be understood that although the terms first, second, third, etc. may be used to describe various information in the embodiments of present disclosures, these information should not be limited to these terms. These terms are only used to distinguish the same type of information from each other. For example, without departing from the scope of the embodiments of present disclosures, the first information may also be referred to as the second information, and similarly, the second information may also be referred to as the first information. Depending on the context, the word "if" as used herein may be interpreted as "at the time of" or "when" or "in response to determining".

For the purpose of brevity and ease of understanding, the terms "greater than" or "less than" are used herein to characterize size relationships. However, those skilled in the art can understand that the term "greater than" also covers the meaning of "greater than or equal to", and "less than" also covers the meaning of "less than or equal to".

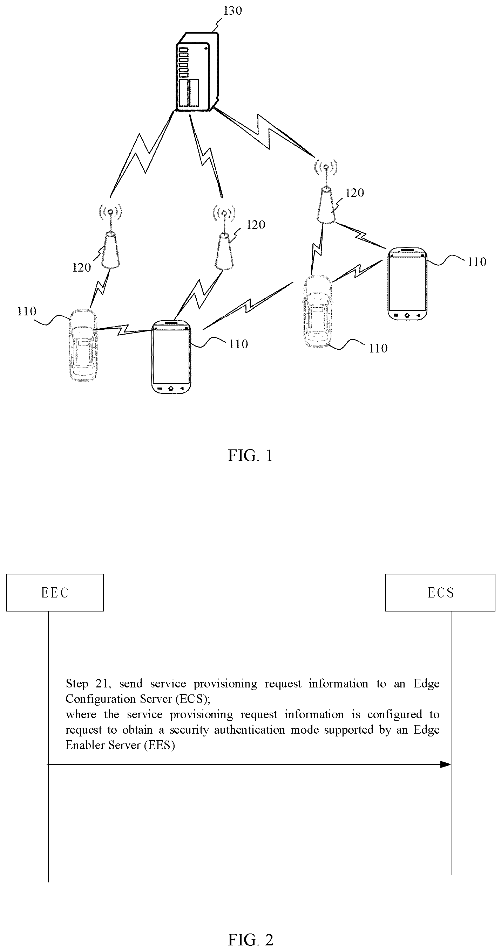

Please refer to FIG. 1, it is a schematic structural diagram showing a wireless communication system provided by an embodiment of the present disclosure. As shown in FIG. 1, the wireless communication system is a communication system based on mobile communication technology, and the wireless communication system may include several user equipments 110 and several base stations 120.

The user equipment 110 can be a device that provides voice and/or data connectivity to the user. The user equipment 110 can communicate with one or more core networks via a Radio Access Network (RAN). The user equipment 110 can be an Internet of Things user equipment, such as a sensor device, a mobile phone, and a computer with an Internet of Things user equipment. For example, it can be a fixed, portable, pocket-sized, handheld, computer-built-in or vehicle-mounted device. For example, it can be a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 can also be a device of an unmanned aerial vehicle. Alternatively, the user equipment 110 can also be a vehicle-mounted device, for example, it can be a driving computer with wireless communication function, or a radio user device connected to an external driving computer. Alternatively, the user equipment 110 may also be a roadside device, for example, a street lamp, a signal lamp or other roadside devices with a wireless communication function.

The base station 120 may be a network-side device in a wireless communication system. The wireless communication system may be a fourth generation mobile communication technology (4G) system, also known as a Long Term Evolution (LTE) system; or, the wireless communication system may be a 5G system, also known as a new radio system or a 5G NR system. Alternatively, the wireless communication system may be a next generation system of the 5G system. An access network in the 5G system may be referred to as New Generation-Radio Access Network (NG-RAN).

The base station 120 may be an evolved base station (eNB) adopted in a 4G system. Alternatively, the base station 120 may also be a base station (gNB) adopting a centralized distributed architecture in a 5G system. When the base station 120 adopts a centralized distributed architecture, it usually includes a centralized unit (CU) and at least two distributed units (DU). The centralized unit is provided with a protocol stack of a Packet Data Convergence Protocol (PDCP) layer, a Radio Link Control (RLC) layer, and a Media Access Control (MAC) layer; the distributed unit is provided with a physical (PHY) layer protocol stack. The specific implementation of the base station 120 is not limited in the embodiments of the present disclosure.

A wireless connection may be established between the base station 120 and the user equipment 110 via a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In some embodiments, an End to End (E2E) connection may also be established between the user equipments 110, such as vehicle to vehicle (V2V) communication, vehicle to Infrastructure (V2I) communication, and vehicle to pedestrian (V2P) communication in vehicle to everything (V2X) communication.

Here, the user equipment can be considered as the terminal device in the following embodiments.

In some embodiments, the wireless communication system may further include a network management device 130.

Several base stations 120 are respectively connected to the network management device 130. The network management device 130 may be a core network device in a wireless communication system. For example, the network management device 130 may be a Mobility Management Entity (MME) in an Evolved Packet Core (EPC). Alternatively, the network management device may also be other core network devices, such as a Serving Gateway (SGW), a Public Data Network Gateway (PGW), a Policy and Charging Rules Function (PCRF), or a Home Subscriber Server (HSS). The implementation form of the network management device 130 is not limited in the embodiments of the present disclosure do not limit the.

In order to facilitate the understanding by those skilled in the art, the embodiments of the present disclosure enumerates a plurality of implementations to clearly illustrate the technical solutions of the embodiments of the present disclosure. Of course, those skilled in the art can understand that the plurality of embodiments provided by the embodiments of the present disclosure can be performed separately, or can be performed together in combination with the methods of other embodiments in the embodiments of the present disclosure, or can be performed with some methods in other related technologies separately or in combination, which is not limited in the embodiments of the present disclosure.

As shown in FIG. 2, an embodiment of the present disclosure provides an authentication method, the method is performed by an Edge Enabler Client (EEC), and the method includes:
in step 21, sending service provisioning request information to an Edge Configuration Server (ECS);
where the service provisioning request information is configured to request to obtain a security authentication mode supported by an Edge Enabler Server (EES).

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a new radio (NR) terminal (for example, an R17 NR terminal).

Here, the Edge Enabler Client (EEC) may be an application running on the terminal, for example, a WeChat application or a Weibo application, etc.

In an embodiment, the service provisioning request information is sent to an Edge Configuration Server (ECS), the service provisioning request information is configured to request a security authentication mode supported by an Edge Enabler Server (EES), and the service provisioning request information includes home network information of a terminal corresponding to the EEC.

It should be noted that the home network information includes at least one of a home network identifier, an Authentication and Key Management for Applications (AKMA) Key Identifier (A-KID) and a session transaction identifier (Bootstrapping Transaction Identifier, B-TID), which can be used to identify the home network of the terminal or EEC.

In an embodiment, the service provisioning request information is sent to the Edge Configuration Server (ECS), and the service provisioning request information is used to request to obtain a security authentication mode supported by an Edge Enabler Server (EES). Authentication capability information of the EES sent by the ECS is received, and the authentication capability information of the EES indicates the security authentication mode supported by the EES.

In an embodiment, location information and/or application client profile (AC Profile) of the terminal corresponding to the EEC is sent to the Edge Configuration Server (ECS); after receiving the location information and/or application client profile of the terminal corresponding to the EEC, the ECS stores them in the ECS; the location information and/or application client profile of the terminal corresponding to the EEC is used for the ECS to identify the ECS.

In an embodiment, the service provisioning request information is sent to the Edge Configuration Server (ECS), and the service provisioning request information is used to request to obtain the security authentication mode supported by the Edge Enabler Server (EES). The authentication capability information of the EES sent by the ECS is received, and the authentication capability information of the EES indicates the security authentication mode supported by the EES. In response to the EES not being authorized to use Authentication and Key Management for Applications (AKMA) in a visited network or home network of the EEC, the authentication capability information of the EES does not include a Transport Layer Security (TLS) authentication mode based on AKMA; and/or, in response to the EES not being authorized to use AKMA in the visited network or home network of a terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include a Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

In an embodiment, the service provisioning request information is sent to the Edge Configuration Server (ECS), and the service provisioning request information is used to request to obtain the security authentication mode supported by the Edge Enabler Server (EES). The authentication capability information of the EES and information for establishing a connection between the ECS and the EES sent by the ECS are received, and the authentication capability information of the EES indicates the security authentication mode supported by the EES.

In an embodiment, the EEC is configured with the authentication capability information of the ECS, and the authentication capability information of the ECS indicates the security authentication mode supported by the ECS.

In an embodiment, the authentication capability information of the ECS is pre-configured in the EEC; or the authentication capability information of the ECS is configured in the EEC by an Edge-aware Application Client (Edge-aware AC); or the authentication capability information of the ECS is configured in the EEC by a user.

In an embodiment, an authentication mode for performing mutual authentication between the EEC and the ECS is determined based on first authentication capability information, and first authentication capability information includes at least one of the following: a security authentication mode supported by the EEC; a security authentication mode supported by the Edge Configuration Server (ECS); a security authentication mode supported by the home network; and a security authentication mode supported by the visited network.

In an embodiment, an authentication mode for performing mutual authentication between the EEC and the ECS is determined based on first authentication capability information. The authentication between the EEC and the ECS is performed based on the authentication mode. In response to the mutual authentication between the EEC and the ECS being successful, a Transport Layer Security (TLS) connection is established between the EEC and the ECS.

In an embodiment, an authentication mode for performing mutual authentication between the EEC and the ECS is determined based on first authentication capability information. The authentication between the EEC and the ECS is performed based on the authentication mode. In response to the mutual authentication between the EEC and the ECS being successful, a Transport Layer Security (TLS) connection is established between the EEC and the ECS. The service provisioning request information is sent to the Edge Configuration Server (ECS) based on the TLS connection, and the service provisioning request information is used to request to obtain the security authentication mode supported by the Edge Enabler Server (EES).

In an embodiment, an authentication mode for performing mutual authentication between the EEC and the ECS is determined based on the authentication capability information. The authentication between the EEC and the ECS is performed based on the authentication mode. In response to the mutual authentication between the EEC and the ECS being successful, a Transport Layer Security (TLS) connection is established between the EEC and the ECS. The authentication capability information of the EES sent by the ECS is received based on the TLS connection, and the authentication capability information of the EES indicates the security authentication mode supported by the EES.

In an embodiment, the service provisioning request information is sent to the Edge Configuration Server (ECS), and the service provisioning request information is used to request to obtain the security authentication mode supported by an Edge Enabler Server (EES). The authentication capability information of the EES sent by the ECS is received, and the authentication capability information of the EES indicates the security authentication mode supported by the EES. An authentication mode for performing mutual authentication between the EEC and the EES is determined based on second authentication capability information, and the second authentication capability information includes at least one of the following: a security authentication mode supported by the EEC; a security authentication mode supported by the Edge Enabler Server (EES); a security authentication mode supported by the home network; and a security authentication mode supported by the visited network.

In the embodiments of present disclosure, the service provisioning request information is sent to the Edge Configuration Server (ECS), and the service provisioning request information is used to request to obtain the security authentication mode supported by the Edge Enabler Server (EES). Here, since the service provisioning request information sent to the Edge Configuration Server (ECS) can request to obtain the security authentication mode supported by the Edge Enabler Server (EES), after the authentication capability information of the EES sent by the ECS is received, the authentication between the ECS and the EES can be performed based on the security authentication mode supported by the EES indicated by the authentication capability information of the EES, so that the data transmission between the ECS and the EES is more secure and reliable, improving the security and reliability of the communication.

It should be noted that those skilled in the art can understand that the method provided in the embodiments of the present disclosure can be performed alone or together with some methods in the embodiments of the present disclosure or some methods in related arts.

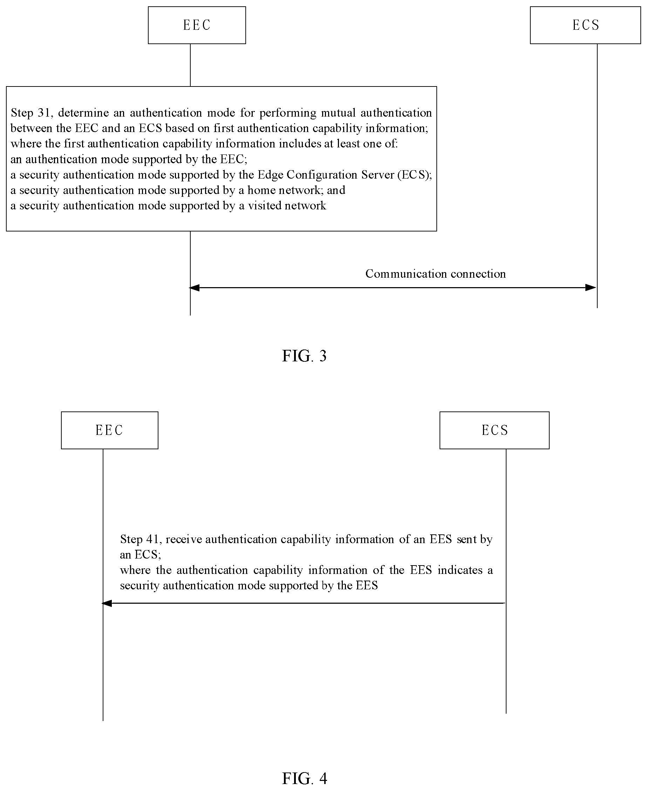

As shown in FIG. 3, an embodiment of the present disclosure provides an authentication method, the method is performed by an Edge Enabler Client (EEC), and the method includes:
in step 31, determining an authentication mode for performing mutual authentication between the EEC and an ECS based on first authentication capability information;
where the first authentication capability information includes at least one of the following:
   an authentication mode supported by the EEC;
   a security authentication mode supported by the Edge Configuration Server (ECS);
   a security authentication mode supported by a home network; and
   a security authentication mode supported by a visited network.

In an embodiment, the EEC is configured with authentication capability information of the ECS, and the authentication capability information of the ECS indicates the security authentication mode supported by the ECS.

In an embodiment, the authentication capability information of the ECS is pre-configured in the EEC; or the authentication capability information of the ECS is configured in the EEC by an edge-aware application client (AC); or the authentication capability information of the ECS is configured in the EEC by a user.

In an embodiment, an authentication mode for performing mutual authentication between the EEC and the ECS is determined based on the first authentication capability information, and the first authentication capability information includes at least one of the following: an authentication mode supported by the EEC; a security authentication mode supported by the Edge Configuration Server (ECS); a security authentication mode supported by the home network, and a security authentication mode supported by the visited network. The authentication between the EEC and the ECS is performed based on the authentication mode. In response to the mutual authentication between the EEC and the ECS being successful, a Transport Layer Security (TLS) connection is established between the EEC and the ECS.

In an embodiment, an authentication mode for performing mutual authentication between the EEC and the ECS is determined based on the first authentication capability information, and the first authentication capability information includes at least one of the following: an authentication mode supported by the EEC; a security authentication mode supported by the Edge Configuration Server (ECS); a security authentication mode supported by the home network, and a security authentication mode supported by the visited network. The authentication between the EEC and the ECS is performed based on the authentication mode. In response to the mutual authentication between the EEC and the ECS being successful, a Transport Layer Security (TLS) connection is established between the EEC and the ECS. The service provisioning request information is sent to the Edge Configuration Server (ECS) based on the TLS connection, and the service provisioning request information is used to request to obtain the security authentication mode supported by the Edge Enabler Server (EES).

In an embodiment, an authentication mode for performing mutual authentication between the EEC and the ECS is determined based on the first authentication capability information, and the first authentication capability information includes at least one of the following: an authentication mode supported by the EEC; a security authentication mode supported by the Edge Configuration Server (ECS); a security authentication mode supported by the home network, and a security authentication mode supported by the visited network. The authentication between the EEC and the ECS is performed based on the authentication mode. In response to the mutual authentication between the EEC and the ECS being successful, a Transport Layer Security (TLS) connection is established between the EEC and the ECS. The service provisioning request information is sent to the Edge Configuration Server (ECS) based on the TLS connection, and the service provisioning request information is used to request to obtain the security authentication mode supported by the Edge Enabler Server (EES). The authentication capability information of the EES and/or information for establishing a connection between the ECS and the EES sent by the ECS is received based on the TLS connection, and the authentication capability information of the EES indicates the security authentication mode supported by the EES.

In an embodiment, in response to the EES not being authorized to use authentication and key management (AKMA) in the visited network or home network of the EEC, the authentication capability information of the EES does not include a Transport Layer Security (TLS) authentication mode based on AKMA; and/or, in response to the EES not being authorized to use AKMA in the visited network or home network of the terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include the Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

It should be noted that those skilled in the art can understand that the method provided in the embodiments of the present disclosure can be performed alone or together with some methods in the embodiments of the present disclosure or some methods in related arts.

As shown in FIG. 4, an embodiment of the present disclosure provides an authentication method, the method is performed by an Edge Enabler Client (EEC), and the method includes:
in step 41, receiving authentication capability information of an EES sent by an ECS;
where the authentication capability information of the EES indicates a security authentication mode supported by the EES.

In an embodiment, service provisioning request information is sent to the Edge Configuration Server (ECS); and the service provisioning request information is used to request to obtain the security authentication mode supported by the Edge Enabler Server (EES). The authentication capability information of the EES sent by the ECS is received; and the authentication capability information of the EES indicates the security authentication mode supported by the EES.

In an embodiment, service provisioning request information is sent to the Edge Configuration Server (ECS), and the service provisioning request information is used to request to obtain the security authentication mode supported by the Edge Enabler Server (EES). The authentication capability information of EES sent by ECS is received, and the authentication capability information of EES indicates the security authentication mode supported by EES. In response to the EES not being authorized to use authentication and key management (AKMA) in a visited network or home network of EEC, the authentication capability information of EES does not include a Transport Layer Security (TLS) authentication mode based on AKMA; and/or, in response to the EES not being authorized to use AKMA in the visited network or home network of a terminal corresponding to EEC, the authentication capability information of EES does not include the Transport Layer Security (TLS) authentication mode based on AKMA; and/or, in response to the EES not being authorized to use General Bootstrapping Architecture (GBA) in the visited network or home network of EEC, the authentication capability information of EES does not include the Transport Layer Security (TLS) authentication mode based on GBA; and/or, in response to the EES not being authorized to use GBA in the visited network or home network of the terminal corresponding to EEC, the authentication capability information of EES does not include the Transport Layer Security (TLS) authentication mode based on GBA.

In an embodiment, service provisioning request information is sent to the Edge Configuration Server (ECS), and the service provisioning request information is used to request to obtain the security authentication mode supported by the Edge Enabler Server (EES). The authentication capability information of the EES and information for establishing a connection between the ECS and the EES sent by the ECS are received, and the authentication capability information of the EES indicates the security authentication mode supported by the EES.

In an embodiment, an authentication mode for performing mutual authentication between the EEC and the ECS is determined based on first authentication capability information, and the first authentication capability information includes at least one of the following: an authentication mode supported by the EEC; a security authentication mode supported by the Edge Configuration Server (ECS); a security authentication mode supported by the home network; and a security authentication mode supported by the visited network. The authentication between the EEC and the ECS is performed based on the authentication mode. In response to the mutual authentication between the EEC and the ECS being successful, a Transport Layer Security (TLS) connection is established between the EEC and the ECS. The service provisioning request information is sent to the Edge Configuration Server (ECS) based on the TLS connection, and the service provisioning request information is used to request to obtain the security authentication mode supported by the Edge Enabler Server (EES). The authentication capability information of the EES and/or the information for establishing a connection between the ECS and the EES sent by the ECS are received based on the TLS connection, and the authentication capability information of the EES indicates the security authentication mode supported by the EES.

It should be noted that those skilled in the art can understand that the method provided in the embodiments of the present disclosure can be performed alone or together with some methods in the embodiments of the present disclosure or some methods in related arts.

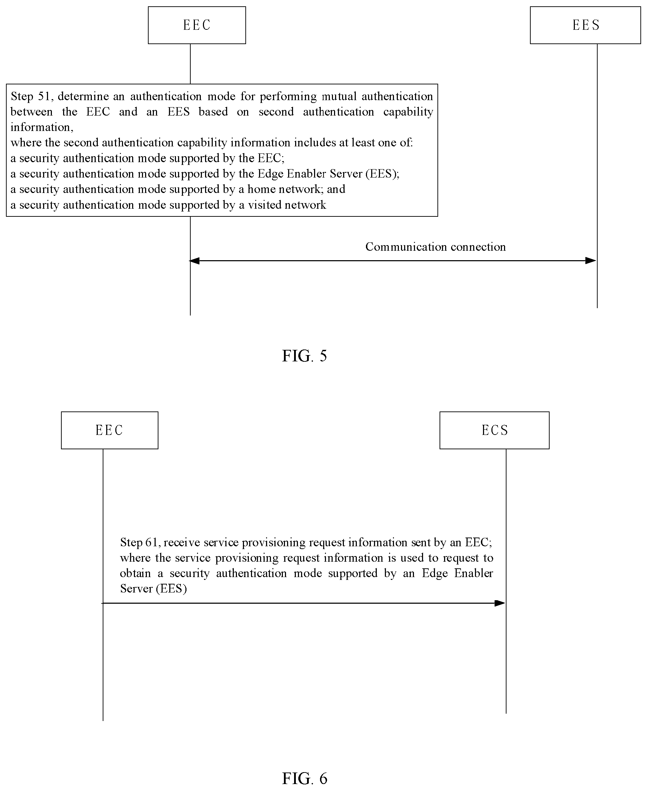

As shown in FIG. 5, an embodiment of the present disclosure provides an authentication method, the method is performed by an Edge Enabler Client (EEC), and the method includes:
in step 51, determining an authentication mode for performing mutual authentication between the EEC and an EES based on second authentication capability information,
where the second authentication capability information includes at least one of the following:
   a security authentication mode supported by the EEC;
   a security authentication mode supported by the Edge Enabler Server (EES);
   a security authentication mode supported by a home network; and
   a security authentication mode supported by a visited network.

In an embodiment, service provisioning request information is sent to the Edge Configuration Server (ECS), and the service provisioning request information is used to request to obtain a security authentication mode supported by the Edge Enabler Server (EES). The authentication capability information of the EES sent by the ECS is received, and the authentication capability information of the EES indicates the security authentication mode supported by the EES. An authentication mode for performing mutual authentication between the EEC and the EES is determined based on the second authentication capability information, and the second authentication capability information includes at least one of the following: a security authentication mode supported by the EEC; a security authentication mode supported by the Edge Enabler Server (EES); a security authentication mode supported by the home network; and a security authentication mode supported by the visited network.

An authentication mode for performing mutual authentication between the EEC and the ECS is determined based on first authentication capability information, and the first authentication capability information includes at least one of the following: an authentication mode supported by the EEC; a security authentication mode supported by the Edge Configuration Server (ECS); a security authentication mode supported by the home network; and a security authentication mode supported by the visited network. The authentication between the EEC and the ECS is performed based on the authentication mode. In response to the mutual authentication between the EEC and the ECS being successful, a Transport Layer Security (TLS) connection is established between the EEC and the ECS. The service provisioning request information is sent to the Edge Configuration Server (ECS) based on the TLS connection, and the service provisioning request information is used to request to obtain the security authentication mode supported by the Edge Enabler Server (EES). The authentication capability information of the EES sent by the ECS is received, and the authentication capability information of the EES indicates the security authentication mode supported by the EES. An authentication mode for performing mutual authentication between the EEC and the EES is determined based on second authentication capability information, and the second authentication capability information includes at least one of the following: a security authentication mode supported by the EEC; a security authentication mode supported by the Edge Enabler Server (EES); a security authentication mode supported by the home network; and a security authentication mode supported by the visited network.

It should be noted that those skilled in the art can understand that the method provided in the embodiments of the present disclosure can be performed alone or together with some methods in the embodiments of the present disclosure or some methods in related arts.

As shown in FIG. 6, an embodiment of the present disclosure provides an authentication method, the method is performed by an Edge Configuration Client (ECS), and the method includes:
in step 61, receiving service provisioning request information sent by an EEC;
where the service provisioning request information is used to request to obtain a security authentication mode supported by an Edge Enabler Server (EES).

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a new radio (NR) terminal (for example, an R17 NR terminal).

Here, the Edge Enabler Client (EEC) may be an application running on the terminal, for example, a WeChat application or a Weibo application, etc.

In an embodiment, service provisioning request information sent by the EEC is received, and the service provisioning request information is used to request to obtain the security authentication mode supported by the Edge Enabler Server (EES), and the service provisioning request information includes home network information of a terminal corresponding to the EEC.

It should be noted that the home network information includes at least one of a home network identifier, an Authentication and Key Management for Applications (AKMA) Key Identifier (A-KID) and a session transaction identifier (Bootstrapping Transaction Identifier, B-TID), which can be used to identify the home network of the terminal or EEC.

In an embodiment, the service provisioning request information sent by the EEC is received, and the service provisioning request information is used to request to obtain the security authentication mode supported by the Edge Enabler Server (EES). Authentication capability information is sent to the EEC, and the authentication capability information of the EES indicates the security authentication mode supported by the EES.

In an embodiment, the service provisioning request information sent by the EEC is received, and the service provisioning request information is used to request to obtain the security authentication mode supported by the Edge Enabler Server (EES). The authentication capability information of the EES is sent to the EEC, and the authentication capability information of the EES indicates the security authentication mode supported by the EES. In response to the EES not being authorized to use authentication and key management (AKMA) in a visited network or home network of the EEC, the authentication capability information of the EES does not include a Transport Layer Security (TLS) authentication mode based on AKMA; and/or, in response to the EES not being authorized to use AKMA in the visited network or home network of a terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include a Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

In an embodiment, the service provisioning request information sent by the EEC is received, and the service provisioning request information is used to request to obtain the security authentication mode supported by the Edge Enabler Server (EES). Authentication capability information of the EES and information for establishing a connection between the ECS and the EES are sent to the EEC, and the authentication capability information of the EES indicates the security authentication mode supported by the EES.

In an embodiment, the authentication capability information of the EES sent by the EES is received, and the authentication capability information of the EES indicates the security authentication mode supported by the EES. The service provisioning request information sent by the EEC is received, and the service provisioning request information is used to request to obtain the security authentication mode supported by the Edge Enabler Server (EES). The authentication capability information of the identified EES is sent to the EEC.

In an embodiment, the authentication capability information of the EES sent by the EES is received, and the authentication capability information of the EES indicates the security authentication mode supported by the EES. The service provisioning request information sent by the EEC is received, and the service provisioning request information is used to request to obtain the security authentication mode supported by the Edge Enabler Server (EES). The authentication capability information of the identified EES and information for establishing a connection between the ECS and the EES are sent to the EEC.

In an embodiment, the authentication capability information of the EES sent by the EES is received in an EES registration process, and the authentication capability information of the EES indicates the security authentication mode supported by the EES. The service provisioning request information sent by the EEC is received, and the service provisioning request information is used to request to obtain the security authentication mode supported by the Edge Enabler Server (EES). The authentication capability information of the identified EES is sent to the EEC.

In an embodiment, in response to the ECS not having the authentication capability information of the identified EES, authentication capability request information is sent to the identified EES, and the authentication capability request information is used to request the authentication capability information of the EES, and the authentication capability information of the EES indicates the security authentication mode supported by the EES. The service provisioning request information sent by the EEC is received, and the service provisioning request information is used to request to obtain the security authentication mode supported by the Edge Enabler Server (EES). The authentication capability information of the identified EES is sent to the EEC. Here, the identified EES is an EES selected according to predetermined conditions.

In an embodiment, the authentication capability request information includes a visited network identifier and/or a home network identifier of the EEC, or the authentication capability request information includes a visited network identifier and/or a home network identifier of a terminal corresponding to the EEC.

In an embodiment, in response to the EES not being authorized to use authentication and key management (AKMA) in the visited network or home network of the EEC, the authentication capability information of the EES does not include a Transport Layer Security (TLS) authentication mode based on the application authentication and key management (AKMA); and/or, in response to the EES not being authorized to use AKMA in the visited network or home network of the terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include a Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

In an embodiment, in response to the ECS not having the authentication capability information of the identified EES, a TLS connection is established between the EES and the ECS. The authentication capability request information is sent to the identified EES based on the TLS connection, and the authentication capability request information is used to request the authentication capability information of the EES.

In an embodiment, in response to the ECS not having the authentication capability information of the identified EES, a TLS connection is established between the EES and the ECS. The authentication capability information of the EES sent by the EES is received based on the TLS connection, and the authentication capability information of the EES indicates the security authentication mode supported by the EES.

It should be noted that those skilled in the art can understand that the method provided in the embodiments of the present disclosure can be performed alone or together with some methods in the embodiments of the present disclosure or some methods in related arts.

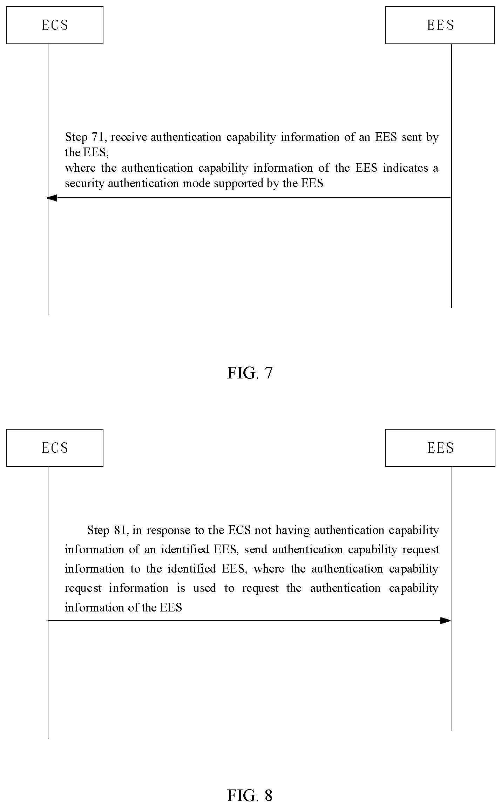

As shown in FIG. 7, an embodiment of the present disclosure provides an authentication method, the method is executed by an Edge Configuration Client (ECS), and the method includes:
in step 71, receiving authentication capability information of the EES sent by the EES;
where the authentication capability information of the EES indicates a security authentication mode supported by the EES.

In an embodiment, the authentication capability information of the EES sent by the EES is received, and the authentication capability information of the EES indicates the security authentication mode supported by the EES. Service provisioning request information sent by the EEC is received, and the service provisioning request information is used to request to obtain the security authentication mode supported by the Edge Enabler Server (EES). The authentication capability information of the identified EES is sent to the EEC.

In an embodiment, the authentication capability information of the EES sent by the EES is received in an EES registration process, and the authentication capability information of the EES indicates the security authentication mode supported by the EES. The Service provisioning request information sent by the EEC is received, and the service provisioning request information is used to request to obtain the security authentication mode supported by the Edge Enabler Server (EES). The authentication capability information of the identified EES is sent to the EEC.

In an embodiment, service provisioning request information sent by the EEC is received, and the service provisioning request information is used to request to obtain the security authentication mode supported by the Edge Enabler Server (EES). In response to the ECS not having the authentication capability information of the identified EES, authentication capability request information is sent to the identified EES, and the authentication capability request information is used to request the authentication capability information of the EES. The authentication capability information of the EES sent by the EES is received, and the authentication capability information of the EES indicates the security authentication mode supported by the EES.

In an embodiment, the authentication capability request information includes a visited network identifier and/or a home network identifier of the EEC, or the authentication capability request information includes a visited network identifier and/or a home network identifier of a terminal corresponding to the EEC.

In an embodiment, the authentication capability request information includes at least one of the following:
home network information of the EEC;
home network information of a terminal corresponding to the EEC;
visited network information of the EEC; and
visited network information of a terminal corresponding to the EEC.

In an embodiment, in response to the EES not being authorized to use authentication and key management (AKMA) in the visited network or home network of the EEC, the authentication capability information of the EES does not include a Transport Layer Security (TLS) authentication mode based on AKMA; and/or, in response to the EES not being authorized to use AKMA in the visited network or home network of the terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include a Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

In an embodiment, the authentication capability information of the EES sent by the EES is received, and the authentication capability information of the EES indicates the security authentication mode supported by the EES, and the authentication capability information of the identified EES is sent to the EEC.

In an embodiment, the authentication capability information of the EES sent by the EES is received, and the authentication capability information of the EES indicates the security authentication mode supported by the EES, and the authentication capability information of the identified EES and information for establishing a connection between the ECS and the EES are sent to the EEC.

It should be noted that those skilled in the art can understand that the method provided in the embodiments of the present disclosure can be performed alone or together with some methods in the embodiments of the present disclosure or some methods in related arts.

As shown in FIG. 8, an embodiment of the present disclosure provides an authentication method, the method is performed by an Edge Configuration Client (ECS), and the method includes:
in step 81, in response to the ECS not having authentication capability information of an identified EES, sending authentication capability request information to the identified EES, where the authentication capability request information is used to request the authentication capability information of the EES.

Here, the identified EES is an EES selected according to specific information, and the specific information includes location information of a terminal corresponding to the EEC, an application client profile (AC Profile) and/or an ECS Provider Policy (ECSP policy).

In an embodiment, service provisioning request information sent by an EEC is received, and the service provisioning request information is used to request to obtain a security authentication mode supported by the Edge Enabler Server (EES). In response to the ECS not having the authentication capability information of the identified EES, authentication capability request information is sent to the identified EES, and the authentication capability request information is used to request the authentication capability information of the EES. The authentication capability information of the EES sent by the EES is received, and the authentication capability information of the EES indicates the security authentication mode supported by the EES.

In an embodiment, the service provisioning request information sent by the EEC is received, and the service provisioning request information is used to request a secure authentication mode supported by the Edge Enabler Server (EES). In response to the ECS not having the authentication capability information of the identified EES, a TLS connection is established between the EES and the ECS. The authentication capability request information is sent to the identified EES based on the TLS connection, and the authentication capability request information is used to request the authentication capability information of the EES. The authentication capability information of the EES sent by the EES is received, and the authentication capability information of the EES indicates the secure authentication mode supported by the EES.

In an embodiment, the authentication capability request information includes a visited network identifier and/or a home network identifier of the EEC, or the authentication capability request information includes a visited network identifier and/or a home network identifier of a terminal corresponding to the EEC.

In an embodiment, in response to the EES not being authorized to use authentication and key management (AKMA) in the visited network or home network of the EEC, the authentication capability information of the EES does not include a Transport Layer Security (TLS) authentication mode based on AKMA; and/or, in response to the EES not being authorized to use AKMA in the visited network or home network of the terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include a Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

In an embodiment, the service provisioning request information sent by the EEC is received, and the service provisioning request information is used to request to obtain a security authentication mode supported by the Edge Enabler Server (EES). In response to the ECS not having the authentication capability information of the identified EES, authentication capability request information is sent to the identified EES, and the authentication capability request information is used to request the authentication capability information of the EES. The authentication capability information of the EES sent by the EES is received, and the authentication capability information of the EES indicates the security authentication mode supported by the EES. The authentication capability information of the identified EES is sent to the EEC.

In an embodiment, the service provisioning request information sent by the EEC is received, and the service provisioning request information is used to request to obtain the secure authentication mode supported by the Edge Enabler Server (EES). In response to the ECS not having the authentication capability information of the identified EES, authentication capability request information is sent to the identified EES, and the authentication capability request information is used to request authentication capability information of the EES. The authentication capability information of the EES sent by the EES is received, and the authentication capability information of the EES indicates the secure authentication mode supported by the EES. The authentication capability information of the identified EES and information for establishing a connection between the ECS and the EES are sent to the EEC.

It should be noted that those skilled in the art can understand that the method provided in the embodiments of the present disclosure can be performed alone or together with some methods in the embodiments of the present disclosure or some methods in related arts.

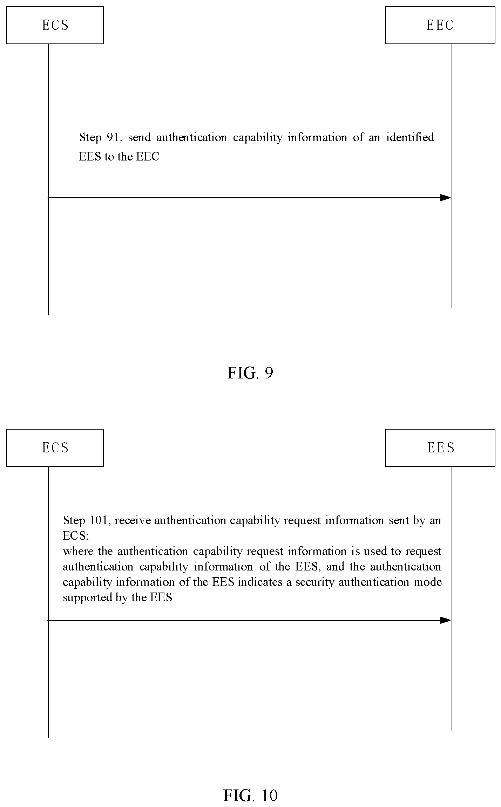

As shown in FIG. 9, an embodiment of the present disclosure provides an authentication method, the method is performed by an Edge Configuration Client (ECS), and the method includes:
in step 91, sending authentication capability information of an identified EES to the EEC.

In an embodiment, service provisioning request information sent by the EEC is received, and the service provisioning request information is used to request to obtain a security authentication mode supported by the Edge Enabler Server (EES), and the authentication capability information of the identified EES is sent to the EEC.

In an embodiment, service provisioning request information sent by the EEC is received, and the service provisioning request information is used to request to obtain a security authentication mode supported by the Edge Enabler Server (EES). The identified authentication capability information of the EES and information for establishing a connection between the ECS and the EES are sent to the EEC.

In an embodiment, a service provisioning request information sent by an EEC is received, and the service provisioning request information is used to request a security authentication mode supported by an Edge Enabler Server (EES). In response to the ECS not having authentication capability information of the identified EES, authentication capability request information is sent to the identified EES, and the authentication capability request information is used to request the authentication capability information of the EES. The authentication capability information of the EES sent by the EES is received, and the authentication capability information of the EES indicates the security authentication mode supported by the EES. The authentication capability information of the identified EES is sent to the EEC.

It should be noted that those skilled in the art can understand that the method provided in the embodiments of the present disclosure can be performed alone or together with some methods in the embodiments of the present disclosure or some methods in related arts.

As shown in FIG. 10, an embodiment of the present disclosure provides an authentication method, the method is performed by an Edge Configuration Server (EES), and the method includes:
in step 101, receiving authentication capability request information sent by an ECS;
where the authentication capability request information is used to request authentication capability information of the EES, and the authentication capability information of the EES indicates a security authentication mode supported by the EES.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a new radio (NR) terminal (for example, an R17 NR terminal).

Here, the Edge Enabler Client (EEC) may be an application running on the terminal, for example, a WeChat application or a Weibo application, etc.

In an embodiment, the authentication capability request information sent by ECS is received, and the authentication capability request information is used to request authentication capability information of the EES, and the authentication capability information of the EES indicates a security authentication mode supported by the EES. The authentication capability request information includes a visited network identifier and/or a home network identifier of the EEC, or the authentication capability request information includes a visited network identifier and/or a home network identifier of a terminal corresponding to the EEC.

In an embodiment, the authentication capability request information sent by the ECS is received, and the authentication capability request information is used to request authentication capability information of the EES, and the authentication capability information of the EES indicates a security authentication mode supported by the EES. The authentication capability information of the EES is sent to the ECS.

In an embodiment, in response to the EES not being authorized to use authentication and key management (AKMA) in the visited network or home network of the EEC, the authentication capability information of the EES does not include a Transport Layer Security (TLS) authentication mode based on AKMA; and/or, in response to the EES not being authorized to use AKMA in the visited network or home network of the terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include a Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

In an embodiment, the authentication capability request information sent by the ECS is received, and the authentication capability request information is used to request authentication capability information of the EES, and the authentication capability information of the EES indicates a security authentication mode supported by the EES. Authorization confirmation information is sent to the visited network and/or home network of the EEC, and authorization response information is received from the visited network and/or home network, and the authorization response information indicates at least one of the following: the EEC is authorized to use AKMA; the EEC is not authorized to use AKMA; the EEC is authorized to use GBA; and the EEC is not authorized to use GBA. It should be noted that the visited network and the home network determine the authorization response information based on the identifier sent by the ECS.

It should be noted that those skilled in the art can understand that the method provided in the embodiments of the present disclosure can be performed alone or together with some methods in the embodiments of the present disclosure or some methods in related arts.

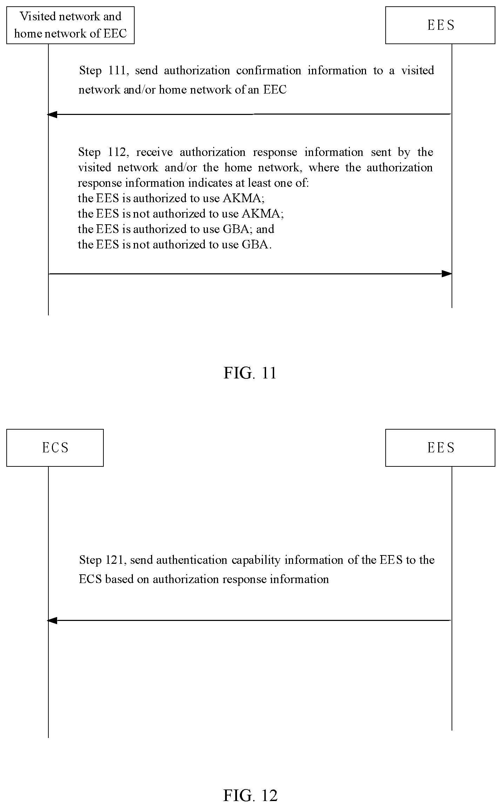

As shown in FIG. 11, an embodiment of the present disclosure provides an authentication method, the method is performed by an Edge Configuration Server (EES), and the method includes:
in step 111, sending authorization confirmation information to a visited network and/or home network of an EEC; and
in step 112, receiving authorization response information sent by the visited network and/or the home network, where the authorization response information indicates at least one of the following:
   the EES is authorized to use AKMA;
   the EES is not authorized to use AKMA;
   the EES is authorized to use GBA; and
   the EES is not authorized to use GBA.

In an embodiment, authorization confirmation message is sent to a visited network and/or a home network of the EEC, and authorization response message sent by the visited network and/or the home network is received, and the authorization response message indicates at least one of the following: the EES is authorized to use AKMA; the EES is not authorized to use AKMA; the EES is authorized to use GBA; and the EES is not authorized to use GBA. Based on the authorization response message, authentication capability information of the EES is sent to the ECS.

In an embodiment, the visited network and/or home network of the EEC determines whether to authorize AKMA and/or GBA based on identification information sent by the ECS, obtains a determination result, and determines the authorization response information based on the determination result. It should be noted that as long as one of the visited network and the home network of the EEC does not authorize AKMA, AKMA is not authorized; and/or, as long as one of the visited network and the home network of the EEC does not authorize GBA, GBA is not authorized.

It should be noted that those skilled in the art can understand that the method provided in the embodiments of the present disclosure can be performed alone or together with some methods in the embodiments of the present disclosure or some methods in related arts.

As shown in FIG. 12, an embodiment of the present disclosure provides an authentication method, the method is executed by an Edge Configuration Server (EES), and the method includes:
in step 121, sending authentication capability information of the EES to the ECS based on authorization response information.

In an embodiment, authorization confirmation information is sent to a visited network and/or a home network of the EEC, and authorization response information sent by the visited network and/or the home network is received, and the authorization response message indicates at least one of the following: the EEC is authorized to use AKMA; the EEC is not authorized to use AKMA; the EEC is authorized to use GBA; and the EEC is not authorized to use GBA. Based on the authorization response message, authentication capability information of the EES is sent to the ECS.

In an embodiment, in response to the EES not being authorized to use authentication and key management (AKMA) in the visited network or home network of the EEC, the authentication capability information of the EES does not include a Transport Layer Security (TLS) authentication mode based on AKMA; and/or, in response to the EES not being authorized to use AKMA in the visited network or home network of the terminal corresponding to the EEC, the authentication capability information of the EES does not include the Transport Layer Security (TLS) authentication mode based on AKMA; and/or, in response to the EES not being authorized to use General Bootstrapping Architecture (GBA) in the visited network or home network of the EEC, the authentication capability information of the EES does not include a Transport Layer Security (TLS) authentication mode based on GBA; and/or, in response to the EES not being authorized to use GBA in the visited network or home network of the terminal corresponding to the EEC, the authentication capability information of the EES does not include the Transport Layer Security (TLS) authentication mode based on GBA.

It should be noted that those skilled in the art can understand that the method provided in the embodiments of the present disclosure can be performed alone or together with some methods in the embodiments of the present disclosure or some methods in related arts.

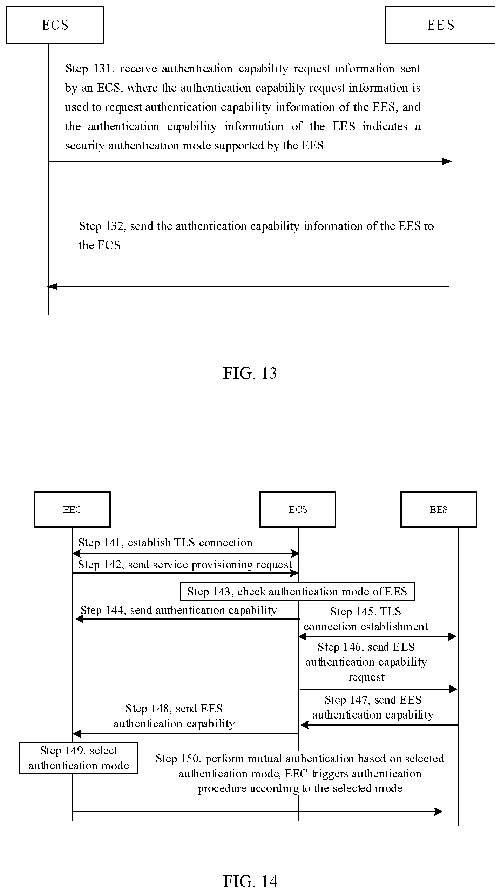

As shown in FIG. 13, an embodiment of the present disclosure provides an authentication method, the method is executed by an Edge Configuration Server (EES), and the method includes:
in step 131, receiving authentication capability request information sent by an ECS, where the authentication capability request information is used to request authentication capability information of the EES, and the authentication capability information of the EES indicates a security authentication mode supported by the EES; and
in step 132, sending the authentication capability information of the EES to the ECS.

It should be noted that those skilled in the art can understand that the method provided in the embodiments of the present disclosure can be performed alone or together with some methods in the embodiments of the present disclosure or some methods in related arts.

In order to better understand the embodiments of the present disclosure, the technical solutions of the present disclosure are further described below through an illustrative embodiment.

### Example 1:

Assume that an EEC can be configured with authentication capability of an ECS. The authentication capability of the ECS can be pre-configured with EEC through ECS configuration information; the authentication capability of the ECS can be configured by an edge-aware Application Client (AC) through ECS configuration information; the authentication capability of the ECS can be configured by the user through ECS configuration information.

Referring to FIG. 14, an embodiment of the present disclosure provides an authentication method, including the following steps.

In step 140, an Edge Enabler Client (EEC) may obtain authentication capability of a visited network and a home network during a registration process. The authentication capability indicates authentication mechanisms that are supported. The security authentication modes include at least one of the following: a Transport Layer Security (TLS) authentication mode based on General Bootstrapping Architecture (GBA); a TLS authentication mode based on Authentication and Key Management for Applications (AKMA); and an authentication mode based on a certificate. The EES may send its authentication capability to the ECS during an EES registration process.

In step 141, a TLS connection is established. The EEC selects a mutual authentication mode to be used between the EEC and the ECS based on the authentication capability of the EEC, the authentication capability of the ECS, the authentication capability of the home network, and the authentication capability of the visited network. After the mutual authentication, the TLS connection is established between the EEC and the ECS. After step 141, messages between the EEC and the ECS are protected.

In step 142, a service provisioning request is sent. In order to obtain security authentication modes supported by the EEC, the EEC sends a service provisioning request to the ECS. The service provisioning request includes security credentials of the EEC received during an EEC authorization process, and may include a UE identifier, such as a Generic Public Subscription Identifier (GPSI), connectivity information, UE location information, and AC profile information. The EEC may send its home network identifier to the ECS.

In step 143, the authentication mode of the EES is checked. If the AC profile information is provided by the EEC, the ECS identifies the EES based on the provided AC profile information and the UE location information. If the AC profile is not provided, the ECS identifies the EES based on UE-specific service information and the UE location information at the ECS; or the ECS identifies the EES by applying an ECS provider policy (e.g., based only on the UE location information), and the ECS checks whether it has the authentication capability of the identified EES.

In step 144, the authentication capability information is sent. If the ECS has the authentication capability information of the identified EES, steps 145 to 148 should be skipped. The ECS sends the authentication capability of the identified EES to the EEC along with information for establishing a connection with the identified EES (e.g., Uniform Resource Identifier (URI) and IP address).

In step 145, TLS connection is established. If the ECS does not have the authentication capability information of the identified EES, the TLS connection is established between the EES and the ECS. After step 145, the messages between the EES and the ECS are protected.

In step 146, an EES authentication capability request is sent. In order to obtain the authentication capability of the identified EES, the ECS sends an EES authentication capability request to the EES. The ECS may send a visited network identifier and a home network identifier to the EES.

In step 147, the authentication capability information of the EES is sent. After receiving the authentication capability request, the EES sends its authentication capability information back to the ECS. If the EES is not authorized to use AKMA in the visited network and home network of the UE (EEC), the EES shall not include TLS with AKMA in the authentication capability information. If the EES is not authorized to use GBA in the visited network and home network of the UE (EEC), the EES shall not include TLS with GBA in the authentication capability information.

In step 148, the authentication capability information of the EES is sent. The ECS sends the authentication capability of the identified EES to the EEC along with the information (e.g., URI and IP address) for establishing a connection to the identified EES.

In step 149, an authentication mode is selected. The EEC selects a security authentication mode based on the authentication capability of the EEC, the authentication capability of the EES, the authentication capability of the home network, and the authentication capability of the visited network.

In step 150, mutual authentication is performed based on the selected authentication mode. The EEC triggers the authentication procedure according to the selected mode.

In an embodiment, the EES may send registration request information to the ECS, and include the authentication capability information of the EES in the registration request information. The ECS obtains the authentication capability information of the EES from the registration request information, and stores the authentication capability information of the EES and the identifier of the EES locally.

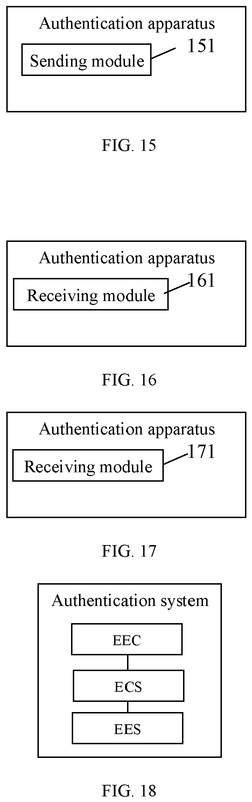

As shown in FIG. 15, an embodiment of the present disclosure provides an authentication apparatus, and the apparatus includes:
a sending module 151, configured to send service provisioning request information to an Edge Configuration Server (ECS);
where the service provisioning request information is used to request to obtain a security authentication mode supported by an Edge Enabler Server (EES).

As shown in FIG. 16, an embodiment of the present disclosure provides an authentication apparatus, and the apparatus includes:
a receiving module 161, configured to receive service provisioning request information sent by an EEC;
where the service provisioning request information is used to request to obtain a security authentication mode supported by an Edge Enabler Server (EES).

It should be noted that those skilled in the art can understand that the method provided in the embodiments of the present disclosure can be performed alone or together with some methods in the embodiments of the present disclosure or some methods in related arts.

As shown in FIG. 17, an embodiment of the present disclosure provides an authentication apparatus, and the apparatus includes:
a receiving module 171, configured to receive authentication capability request information sent by an ECS;
where the authentication capability request information is used to request authentication capability information of an EES, and the authentication capability information of the EES indicates a security authentication mode supported by the EES.

It should be noted that those skilled in the art can understand that the method provided in the embodiments of the present disclosure can be performed alone or together with some methods in the embodiments of the present disclosure or some methods in related arts.

As shown in FIG. 18, an embodiment of the present disclosure provides an authentication system, the system includes an EEC, an ECS and an EES, the EEC is configured to implement any method performed by the EEC described in the present disclosure; the ECS is configured to implement any method performed by the ECS described in the present disclosure; and the EES is configured to implement any method performed by the EES described in the present disclosure.

It should be noted that those skilled in the art can understand that the method provided in the embodiments of the present disclosure can be performed alone or together with some methods in the embodiments of the present disclosure or some methods in related arts.

An embodiment of present disclosure provides a communication device, the communication device including:
a processor; and
a memory configured to store instructions executable by the processor;
where the processor is configured to implement the method applied to any embodiment of the present disclosure when running executable instructions.

The processor may include various types of storage media, which are non-transitory computer storage media that can continue to memorize information stored thereon after the communication device is powered down.

The processor may be connected to the memory via a bus or the like to read the executable program stored in the memory.

An embodiment of the present disclosure further provides a computer storage medium, the computer storage medium stores a computer executable program, and the executable program, when being executed by a processor, implements the method of any of the embodiments of the present disclosure.

Regarding the apparatus in the above embodiments, the specific manner in which the module perform operations have been described in detail in the embodiments of the method, which will not be repeated here.

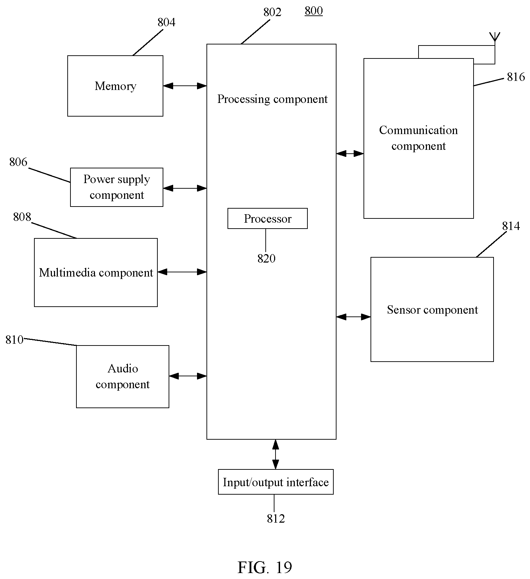

As shown in FIG. 19, an embodiment of the present disclosure provides a structure of a terminal.

Referring to FIG. 19, the embodiment provides a terminal 800, which may be a mobile phone, a computer, a digital broadcast terminal, a messaging device, a game console, a tablet device, a medical device, a fitness device, a personal digital assistant, etc.

Referring to FIG. 19, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to complete all or part of the steps of the above methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the device 800. Examples of such data include instructions for any application or method operating on the terminal 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power to various components of the terminal 800. The power supply component 806 may include a power management system, one or more power supplies, and other components associated with generating, managing, and distributing power to the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the device 800 is in an operating mode, such as a shooting mode or a video mode, the front camera and/or the rear camera may receive external multimedia data. Each of the front camera and rear camera may be a fixed optical lens system or have a focal length and optical zoom capability.

The audio component 810 is configured to output and/or input audio signals. For example, the audio component 810 includes a microphone (MIC), and when the terminal 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules, such as a keyboard, a click wheels, buttons, etc. These buttons may include but are not limited to: a home button, a volume button, a start button, and a lock button.

The sensor component 814 includes one or more sensors for providing various aspects of status assessment for the terminal 800. For example, the sensor component 814 can detect the open/closed state of the device 800, the relative positioning of the components, such as the display and keypad of the terminal 800, and the sensor component 814 can also detect the position change of the terminal 800 or a component in the terminal 800, the presence or absence of contact between the user and the terminal 800, the orientation or acceleration/deceleration of the terminal 800, and the temperature change of the terminal 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as Wi-Fi, 2G or 3G, or a combination thereof. In an illustrative embodiment, the communication component 816 receives a broadcast signal or broadcast-related information from an external broadcast management system via a broadcast channel. In an illustrative embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as a memory 804 including instructions, and the instructions can be executed by a processor 820 of the terminal 800 to complete the above methods. For example, the non-transitory computer-readable storage medium can be a ROM, a random access memory (RAM), a CD-ROM, a magnetic tape, a floppy disk, an optical data storage device, etc.

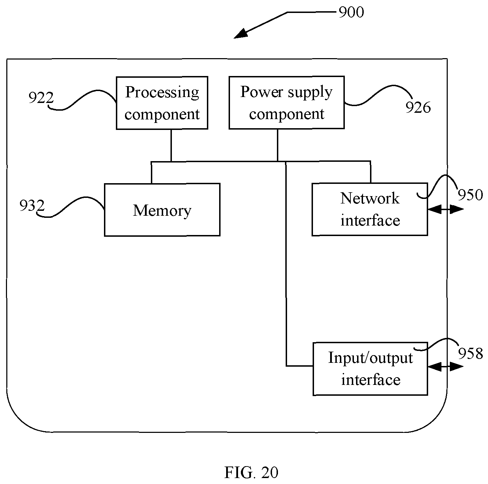

As shown in FIG. 20, an embodiment of the present disclosure illustrates a structure of a base station. For example, a base station 900 may be provided as a network-side device. Referring to FIG. 20, the base station 900 includes a processing component 922, which further includes one or more processors, and a memory resource represented by a memory 932 configured to store instructions executable by the processing component 922, such as an application. The application stored in the memory 932 may include one or more modules, each of which corresponds to a set of instructions. In addition, the processing component 922 is configured to execute instructions to perform any method applied to the base station in the aforementioned methods.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM or the like.

Those skilled in the art will readily appreciate other embodiments of the present disclosure after considering the specification and practicing the present disclosure disclosed herein. The present disclosure is intended to cover any variations, uses or adaptations of the present disclosure that follow the general principles of the present disclosure and include common knowledge or conventional technical measures in the art that are not disclosed in the present disclosure. The description and embodiments are to be considered illustrative only, and the true scope and spirit of the present disclosure are indicated by the following claims.

It should be understood that the present disclosure is not limited to the precise construction that has been described above and shown in the drawings and that various modifications and changes may be made without departing from the scope thereof. The scope of the present disclosure is limited only by the appended claims.

## Claims

1. An authentication method, the method being performed by an Edge Enabler Client (EEC), and the method comprising:
sending service provisioning request information to an Edge Configuration Server (ECS);
wherein the service provisioning request information is configured to request to obtain a security authentication mode supported by an Edge Enabler Server (EES).

2. The method according to claim 1, wherein the service provisioning request information comprises home network information of a terminal corresponding to the EEC.

3. The method according to claim 1, wherein the EEC is configured with authentication capability information of the ECS, and the authentication capability information of the ECS indicates a security authentication mode supported by the ECS.

4. The method according to claim 1, wherein authentication capability information of the ECS is pre-configured in the EEC; or the authentication capability information of the ECS is configured in the EEC by an edge-aware Application Client (AC); or the authentication capability information of the ECS is configured in the EEC by a user.

5. The method according to claim 1, wherein the method further comprises:
determining an authentication mode for performing mutual authentication between the EEC and the ECS based on first authentication capability information;
wherein the first authentication capability information comprises at least one of the following:
an authentication mode supported by the EEC;
a security authentication mode supported by the Edge Configuration Server (ECS);
a security authentication mode supported by a home network; and
a security authentication mode supported by a visited network.

6. The method according to claim 5, wherein the method further comprises:
in response to mutual authentication between the EEC and the ECS being successful, establishing a Transport Layer Security (TLS) connection between the EEC and the ECS.

7. The method according to claim 1, wherein the method further comprises:
receiving authentication capability information of the EES sent by the ECS;
wherein the authentication capability information of the EES indicates the security authentication mode supported by the EES.

8. The method according to claim 7, wherein receiving the authentication capability information of the EES sent by the ECS comprises:
receiving the authentication capability information of the EES and information for establishing a connection between the ECS and the EES sent by the ECS.

9. The method according to claim 7, wherein:
in response to the EES not being authorized to use Authentication and Key Management for Applications (AKMA) in a visited network or a home network of the EEC, the authentication capability information of the EES does not comprise a Transport Layer Security (TLS) authentication mode based on the Authentication and Key Management for Applications (AKMA);
and/or,
in response to the EES not being authorized to use AKMA in a visited network or home network of a terminal corresponding to the EEC, the authentication capability information of the EES does not comprise a Transport Layer Security (TLS) authentication mode based on AKMA;
and/or,
in response to the EES not being authorized to use General Bootstrapping Architecture (GBA) in the visited network or the home network of the EEC, the authentication capability information of the EES does not comprise a Transport Layer Security (TLS) authentication mode based on GBA;
and/or,
in response to the EES not being authorized to use GBA in the visited network or the home network of the terminal corresponding to the EEC, the authentication capability information of the EES does not comprise the Transport Layer Security (TLS) authentication mode based on GBA.

10. The method according to claim 7, wherein the method further comprises:
determining an authentication mode for performing mutual authentication between the EEC and the EES based on second authentication capability information;
wherein the second authentication capability information comprises at least one of the following:
a security authentication mode supported by the EEC;
a security authentication mode supported by the Edge Enabler Server (EES);
a security authentication mode supported by a home network; and
a security authentication mode supported by a visited network.

11. An authentication method, the method being performed by an Edge Configuration Client (ECS), and the method comprising:
receiving service provisioning request information sent by an EEC;
wherein the service provisioning request information is configured to request to obtain a security authentication mode supported by an Edge Enabler Server (EES).

12. The method according to claim 11, wherein the service provisioning request information comprises home network information of a terminal corresponding to the EEC.

13. The method according to claim 11, wherein the method further comprises:
receiving authentication capability information of the EES sent by the EES;
wherein the authentication capability information of the EES indicates the security authentication mode supported by the EES.

14. The method according to claim 13, wherein receiving the authentication capability information of the EES sent by the EES comprises:
receiving the authentication capability information of the EES sent by the EES during an EES registration process.

15. The method according to claim 13, wherein the method further comprises:
in response to the ECS not having the authentication capability information of an identified EES, sending authentication capability request information to the identified EES;
wherein the authentication capability request information is configured to request the authentication capability information of the EES.

16. The method according to claim 15, wherein the authentication capability request information comprises a visited network identifier and/or a home network identifier of the EEC, or the authentication capability request information comprises a visited network identifier and/or a home network identifier of a terminal corresponding to the EEC.

17. The method according to claim 13, wherein the method further comprises:
in response to the ECS not having the authentication capability information of an identified EES, sending authentication capability request information to the EES;
wherein the authentication capability request information comprises at least one of the following:
home network information of the EEC;
home network information of a terminal corresponding to the EEC;
visited network information of the EEC; and
visited network information of the terminal corresponding to the EEC.

18. The method according to claim 13, wherein:
in response to the EES not being authorized to use Authentication and Key Management for Applications (AKMA) in a visited network or a home network of the EEC, the authentication capability information of the EES does not comprise a Transport Layer Security (TLS) authentication mode based on AKMA;
and/or,
in response to the EES not being authorized to use AKMA in the visited network or home network of a terminal corresponding to the EEC, the authentication capability information of the EES does not comprise the Transport Layer Security (TLS) authentication mode based on AKMA;
and/or,
in response to the EES not being authorized to use General Bootstrapping Architecture (GBA) in the visited network or the home network of the EEC, the authentication capability information of the EES does not comprise a Transport Layer Security (TLS) authentication mode based on GBA;
and/or,
in response to the EES not being authorized to use GBA in the visited network or the home network of the terminal corresponding to the EEC, the authentication capability information of the EES does not comprise the Transport Layer Security (TLS) authentication mode based on GBA.

19. The method according to claim 18, wherein the method further comprises:
sending the authentication capability information of an identified EES to the EEC.

20. The method according to claim 19, wherein sending the authentication capability information of the identified EES to the EEC comprises:
sending the authentication capability information of the identified EES and information for establishing a connection between the ECS and the EES to the EEC.

21. An authentication method, the method being performed by an Edge Enabler Server (EES), and the method comprising:
receiving authentication capability request information sent by an ECS;
wherein the authentication capability request information is configured to request authentication capability information of the EES, and the authentication capability information of the EES indicates a security authentication mode supported by the EES.

22. The method according to claim 21, wherein the authentication capability request information comprises a visited network identifier and/or a home network identifier of the EEC, or the authentication capability request information comprises a visited network identifier and/or a home network identifier of a terminal corresponding to the EEC.

23. The method according to claim 21, wherein the authentication capability request information comprises at least one of the following:
home network information of the EEC;
home network information of a terminal corresponding to the EEC;
visited network information of the EEC; and
visited network information of the terminal corresponding to the EEC.

24. The method according to claim 21, wherein the method further comprises:
sending authorization confirmation information to a visited network and/or a home network of the ECC; and
receiving authorization response information sent by the visited network and/or the home network, wherein the authorization response information indicates at least one of the following:
the EES is authorized to use AKMA;
the EES is not authorized to use AKMA;
the EES is authorized to use GBA; and
the EES is not authorized to use GBA.

25. The method according to claim 24, wherein the method further comprises:
sending authentication capability information of the EES to the ECS based on the authorization response information.

26. The method according to claim 25, wherein:
in response to the EES not being authorized to use Authentication and Key Management for Applications (AKMA) in a visited network or a home network of the EEC, the authentication capability information of the EES does not comprise a Transport Layer Security (TLS) authentication mode based on AKMA;
and/or,
in response to the EES not being authorized to use AKMA in the visited network or home network of a terminal corresponding to the EEC, the authentication capability information of the EES does not comprise the Transport Layer Security (TLS) authentication mode based on AKMA;
and/or,
in response to the EES not being authorized to use General Bootstrapping Architecture (GBA) in the visited network or the home network of the EEC, the authentication capability information of the EES does not comprise a Transport Layer Security (TLS) authentication mode based on GBA;
and/or,
in response to the EES not being authorized to use GBA in the visited network or the home network of the terminal corresponding to the EEC, the authentication capability information of the EES does not comprise the Transport Layer Security (TLS) authentication mode based on GBA.

27. An authentication apparatus, wherein the apparatus comprises:
a sending module, configured to send service provisioning request information to an Edge Configuration Server (ECS);
wherein the service provisioning request information is configured to request to obtain a security authentication mode supported by an Edge Enabler Server (EES).

28. An authentication apparatus, wherein the apparatus comprises:
a receiving module, configured to receive service provisioning request information sent by an EEC;
wherein the service provisioning request information is configured to request to obtain a security authentication mode supported by an Edge Enabler Server (EES).

29. An authentication apparatus, wherein the apparatus comprises:
a receiving module, configured to receive authentication capability request information sent by an ECS;
wherein the authentication capability request information is configured to request authentication capability information of an EES, and the authentication capability information of the EES indicates a security authentication mode supported by the EES.

30. An authentication system, wherein the system comprises an EEC, an ECS and an EES, the EEC is configured to implement the method according to any one of claims 1 to 10 performed by the EEC; the ECS is configured to implement the method according to any one of claims 11 to 20 performed by the ECS; and the EES is configured to implement the method according to any one of claims 21 to 26 performed by the EES.

31. A communication device, comprising:
a memory; and
a processor, connected to the memory, wherein the processor is configured to execute computer executable instructions stored on the memory and is capable of implementing the method according to any one of claims 1 to 10, 11 to 20 or 21 to 26.

32. A computer storage medium storing computer executable instructions, wherein the computer executable instructions, after being executed by a processor, implement the method according to any one of claims 1 to 10, 11 to 20, or 21 to 26.
